(19) Europäisches Patentamt
European Patent Office
Office européen des brevets

(11) **EP 3 864 462 B1**

(12) **EUROPEAN PATENT SPECIFICATION**

(45) Date of publication and mention
of the grant of the patent:
**06.08.2025 Bulletin 2025/32**

(21) Application number: **19790738.9**

(22) Date of filing: **10.10.2019**

(51) International Patent Classification (IPC):
**G02B 27/64** (2006.01)     **F03G 7/06** (2006.01)
**G02B 7/08** (2021.01)

(52) Cooperative Patent Classification (CPC):
**F03G 7/06143; F03G 7/0665; G02B 7/08;
G03B 3/12; G03B 5/02; G03B 17/17;** G02B 27/646

(86) International application number:
**PCT/GB2019/052892**

(87) International publication number:
**WO 2020/074914 (16.04.2020 Gazette 2020/16)**

(54) **SMA ACTUATOR ASSEMBLIES**

SMA-BETÄTIGUNGSANORDNUNGEN

ENSEMBLES ACTIONNEURS SMA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2018  GB 201816544
26.03.2019  GB 201904154**

(43) Date of publication of application:
**18.08.2021  Bulletin 2021/33**

(73) Proprietor: **Cambridge Mechatronics Limited
Cambridge CB4 0WG (GB)**

(72) Inventors:
• **HOWARTH, James**
  **Cambridge Cambridgeshire CB4 1YG (GB)**
• **VAN WYK, Peter**
  **Cambridge Cambridgeshire CB4 1YG (GB)**

(74) Representative: **Cambridge Mechatronics Limited
IP Department
306 Cambridge Science Park
Milton Road
Cambridge, Cambridgeshire CB4 0WG (GB)**

(56) References cited:
**CN-U- 207 937 737     US-A1- 2013 002 933**

**Description**

The present techniques generally relate to the use of shape memory alloy ("SMA") actuator wires to provide position control of a movable element supported on a support structure.

There are a variety of apparatuses in which it is desired to provide positional control of a movable element. SMA wires may be advantageous as actuators in such apparatuses, for example due to their high energy density which means that the SMA actuator required to apply a given force to the movable element can be relatively small.

One type of apparatus in which SMA wire is known for use as an actuator is in miniature cameras, for example those used in smartphones or other portable electronic devices. WO 2011/104518 discloses examples of SMA actuation apparatuses which are suitable for use in miniature cameras. CN 207 937 737 U discloses an optical actuator and corresponding camera module. US 2013/002933 A1 discloses an SMA actuation apparatus which is suitable for providing optical image stabilisation.

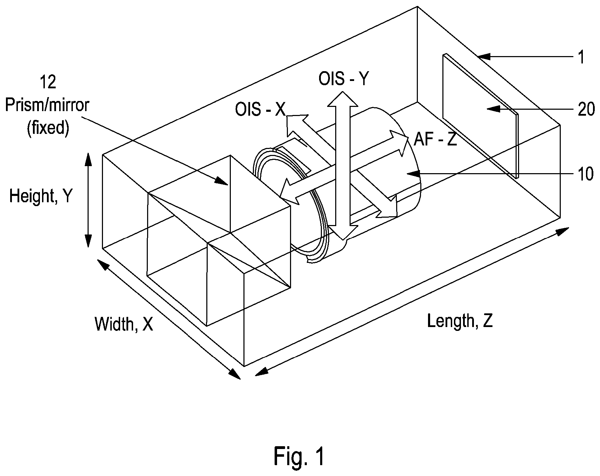

Some miniature cameras have a folded optics arrangement, in which one or more lens elements have their optical axis arranged orthogonal to the axis along which light entering the camera first passes. A mirror or prism can be used to "fold" the optical path. Fig. 1 shows, schematically, the general configuration of a possible folded optics arrangement which is contained within a housing or cover 1. In Fig. 1, the optical axis of the lens element 10 lies along the z-axis between the prism/mirror 12 and the image sensor 20. Light enters the optics arrangement in the y-direction shown before being "folded" to pass along the z-axis. In such an arrangement it is desirable to be able to drive the movement of the lens element 10 in at least each of the orthogonal directions indicated by the axes in Fig. 1. Movement in the x- and y-directions can provide for optical image stabilisation ("OIS"), whilst movement in the z-direction can provide for auto-focus ("AF"). In certain arrangements the lens element 10 may include multiple lenses which are movable relative to each other, with such relative movement providing for zoom.

Folded optics arrangements are particularly useful in devices where the thickness of the device in the direction of initial light entry (the y-direction in Fig. 1) is constrained. For example, smartphones are becoming thinner, such that it becomes more difficult to mount all elements of a camera device along a single optical axis in the thickness direction of the handset.

An object of the present techniques is to provide new actuator assemblies and methods of controlling actuator assemblies. A further object of the present techniques is to provide actuator assemblies that are more compact in at least one direction.

Approaches of the present techniques aim to provide an actuator assembly and methods of controlling actuator assemblies which satisfies one or more of the above objects.

At their broadest, approaches of the present techniques provide actuator assemblies and methods of controlling actuator assemblies in which two groups of actuator wires are arranged on opposite sides of a movable element to which they are connected, wherein the actuator wires have reflectional symmetry in three orthogonal planes.

A first approach of the present techniques provides an SMA actuation apparatus comprising: a support structure; a movable element, the movable element being supported on the support structure so as to be movable relative to the support structure; and eight SMA actuator wires connected between the movable element and the support structure such that, on contraction, the actuator wires provide a force on the movable element, wherein each actuator wire is inclined with respect to a notional primary axis, wherein the actuator wires are suitable for moving the movable element with translational movement in any direction and/or (tilting or) rotational movement about any axis, and wherein the actuator wires are arranged such that two groups of four of said wires are positioned on opposite sides of the movable element, wherein the actuator wires have reflectional symmetry in three orthogonal planes.

The SMA actuation apparatus uses eight SMA actuator wires configured in a manner that can provide positional control of the movable element with multiple degrees of freedom. **In** the most general case, in which the SMA actuator wires are independently driven, position control can be provided to move the movable element with all applicable degrees of freedom: lateral movement in any direction and rotational movement about any axis. For example, the apparatus may comprise an image sensor fixed to the support structure and wherein the movable element may include a lens element arranged to direct light to the image sensor, the lens element having an optical axis.

The SMA actuator wires are configured to move the movable element with translational movement in any direction with respect to the primary axis. A translation movement in a direction along the optical axis changes the focal distance between the lens element and the image sensor, and thereby provides auto-focus (AF) in the apparatus. A translation movement in a direction orthogonal to the optical axis counteracts lateral movements occurred during image capture, and therefore provides optical image stabilisation (OIS). Thus the SMA actuation apparatus advantageously enables the AF and OIS to be carried out simultaneously or independent to each other.

Furthermore, the SMA actuation apparatus may allow the moveable element to tilt or rotate about any axis in combination with or independent of translation movement. For example, the tilting and/or rotational movement may counteract tilting and/or rotational movements occurred during image capture, and therefore provides optical image stabilisation (OIS). In some examples, there is no such rotation.

As will be appreciated, the SMA actuation apparatus need not have any mechanism for bearing the movable element on the support structure.

By grouping the SMA actuator wires on opposite sides of the movable element (and preferably only on those sides), the actuation apparatus can be made in a compact arrangement compared to, for example, arrangements which have actuators on more sides of the movable element. This may be particularly beneficial where the apparatus needs to fit into another apparatus which has size constraints in at least one dimension, such as a folded camera. The apparatus can also be provided as an independent or "bolt-on" system and does not require adjustment of the optical and/or sensor layout of the apparatus that it is being used in.

In some arrangements, the actuator wires have two-fold rotational symmetry about at least one axis passing through the movable element.

In some arrangements, the actuator wires are suitable for moving the movable element with translational movement in any direction with a gearing ratio of less than 10.

As will be explained in more detail below, the gearing ratio can be defined as the ratio of the distance moved to the associated change in length of the SMA wires.

In some arrangements, for any given direction, the actuator wires comprise a set of actuator wires that are inclined at an acute angle greater than zero relative to a plane perpendicular to the given direction.

In some arrangements, in a given group of actuator wires on one side of the movable element, the actuator wires are each inclined at an acute angle greater than zero relative to each of three orthogonal planes including a first plane that is parallel to the principal axis and/or to an axis about which the actuator wires have two-fold rotational symmetry.

The first plane may pass midway between the said opposite sides of the movable element. The first plane may intersect the midpoints of each of the actuator wires in the given group. The first plane may be parallel to the side of the movable element on which the given group is positioned.

The acute angle is preferably greater than 10°.

In some arrangements, the angle is in the range between 10° and 85° or between 10° and 45°. or between 10° and 30° (for achieving a higher gearing ratio as well as e.g. a more compact apparatus).

In some embodiments, the gearing ratio of each of the SMA actuator wires is in the range between 1.4 to 7.2, with a 1 % strain in the wire upon contraction. In some embodiments, the gearing ratio of each of the SMA actuator wires is in the range between 3.0 to 7.2, with a 1 % strain in the wire upon contraction.

Other preferred upper and lower limits for the acute angle and the gearing ratio are described below.

In some arrangements, all of the wires connected to the same side of the moveable element, on contraction, effect lateral movement in the movable element with respect to the primary axis. The side may refer to a single planar surface of the moveable element. Therefore, all of the wires in a single group of four wires, or two wires in each of the two groups of four wires connecting to the same planar surface may simultaneously be actuated to enable translational movement in the moveable element.

In some arrangements, two of the neighbouring wires connected to the same side of the moveable element, on contraction, effect tilting or rotational movement in the movable element. The side may refer to a single planar surface of the moveable element. Therefore, two neighbouring wires in a single group of four wires, or a single wire in each of the two groups of four wires connecting to the same planar surface may simultaneously be actuated to enable tilting or rotational movement in the moveable element.

In some arrangements, the actuator wires have two-fold rotational symmetry about two orthogonal axes passing through the movable element.

In some arrangements the axis of rotational symmetry (or neither of the two orthogonal axes) passes through a centre of each group of actuator wires. In such arrangements, the two groups have reflectional symmetry with each other in a plane passing through the movable element and containing the two orthogonal axes.

In some arrangements the actuator wires have rotational symmetry about three orthogonal axes passing through the movable element. This can alternatively be viewed as having reflectional symmetry in three orthogonal planes.

The axis/axes about which the actuator wires have rotational symmetry may pass through the centre of the movable element, thus making the actuator wires symmetrically arranged about the movable element.

The terms "symmetrical" and "symmetry" as used in this application are to be understood as encompassing arrangements in which there is a small degree of asymmetry, particularly asymmetry which is introduced in order to permit actuator wires to cross without touching.

In certain arrangements, the axis of rotational symmetry, or both of the orthogonal axes, are not the primary axis and the two groups of actuator wires are positioned at opposite sides of the movable element along the primary axis. These arrangements may provide for an actuation apparatus which, whilst increasing the length along the direction of the primary axis, does not extend the apparatus significantly beyond the dimensions of the movable element orthogonal to the primary axis.

In such arrangements, an extent of each of the actuator wires in the direction of the primary axis may be less than an extent of that wire in at least one other direction orthogonal to the primary axis. This may provide for a greater range of movement in the directions of the primary axis compared to the range of movement in directions orthogonal to the primary axis.

In certain arrangements the axis of rotational symmetry or one of the orthogonal axes is the primary axis. These arrangements may provide for an actuation apparatus which, whilst increasing the size of the apparatus in a direction orthogonal to the direction of the primary axis, does not extend the apparatus significantly beyond the dimensions of the rest of the apparatus along the primary axis.

In such arrangements an extent of each of the actuator wires in the direction of the primary axis may be greater than an extent of that wire in at least one other direction orthogonal to the primary axis. This may provide for a greater range of movement in the other direction orthogonal to the primary axis compared to the range of movement in directions of the primary axis.

In certain arrangements at least two of the actuator wires in each group cross when viewed along an axis orthogonal to said axis of rotational symmetry or to the two orthogonal axes. By crossing the actuator wires, the length of the actuator wire can be increased (within the dimensions of the apparatus). Longer wires generally allow for greater forces to be exerted and/or greater ranges of movement to be provided for.

In certain arrangements the four actuator wires in each group cross at the same point when viewed along an axis orthogonal to said axis of rotational symmetry or said two orthogonal axes. In this manner, when viewed from the side of the apparatus on which the group is positioned, the actuator wires may each be connected to the support structure at or near the opposite corner to the corner at which they are connected to the movable element. It is noted that it is generally not preferred that actuator wires touch each other and therefore the crossing of the wires at a single point is preferably only when the wires are viewed in two dimensions, and the wires are separated slightly along the axis that they are viewed.

In certain arrangements, two pairs of actuator wires in each group cross at different points when viewed along an axis orthogonal to said axis of rotational symmetry or to said two orthogonal axes. This arrangement may be easier to manufacture than an arrangement in which four wires cross, whilst still retaining some of the advantages of crossed wires.

The movable element may comprise a central element and a least one extension element which extends from the central element with an extent parallel to the primary axis, wherein the actuator wires in at least one of the groups of actuator wires are connected to the extension element at points distal from the central element. The central element and extension element(s) may be formed integrally as a single element, or may be separate elements joined together.

By having an extension element, the effective size of the movable element can be increased, thus potentially allowing longer actuator wires to be connected to the movable element. For example, one or more of the actuator wires may be arranged to be fixed to the support structure near one corner of the apparatus and cross to connect to the movable element at the opposite corner on the same side.

The extension element may also allow the actuator wires to be connected to the movable element without crossing or approaching the primary axis at any point between the central element and the support structure. This may be advantageous where, for example, the central element is a camera lens element, or other optical element, which is arranged to direct light along, or substantially along, the primary axis. **In** such an arrangement the extension element can allow the actuator wires to be connected to the movable element without interfering with the light paths through the central element.

In certain arrangements the extension element extends from the central element with extents in both directions parallel to the primary axis, and the actuator wires in both groups of actuator wires are connected to the extension element at points distal from the central element. This can provide for a symmetrical movable element such that the actuator wires can be arranged symmetrically and thus their manufacture and control may be simpler.

Purely by way of example, the extension element may take the form of elongate arms or plates or both. The extension element may extend such that the distal corners of the extension element form a cuboid, which, allowing for the range of possible movement of the movable element and/or the space occupied by the actuator wires, substantially occupies the space available for the apparatus. This can maximise the length of the actuator wires within the available space and may maximise the available range of movement of the movable element.

The SMA actuator wires may have electrical connections that allow each of the SMA actuator wires to receive an independent drive signal.

The apparatus may further comprise a control circuit electrically connected to the SMA actuator wires for supplying drive signals thereto.

In certain arrangements, the apparatus is an optical apparatus and may further comprise an image sensor fixed to the support structure and the movable element may include a lens element arranged to direct light to the image sensor. Such arrangements may, for example, be used in miniature cameras.

In certain arrangements the apparatus may further comprise a diverter element fixed to the support structure and arranged to change the direction of light entering the apparatus such that it passes along the principal axis through the lens element to the image sensor. The diverter element may, for example, be a mirror or a prism. Such apparatuses may form part of a folded camera, where the movable lens element and the image sensor are arranged along a different axis to the axis along which light enters the apparatus.

The apparatus may further comprise a vibration sensor arranged to generate output signals representative of the vibration of the apparatus, and the control circuit may be arranged to generate the drive signals in response to said output signals to stabilise the image sensed by the image sensor. This allows the apparatus to provide OIS in a camera arrangement.

The control circuit may be arranged to generate the drive signals in response to the sensed image on the image sensor in order to focus the image sensed by the image sensor. This allows the apparatus to provide AF in a camera arrangement.

The apparatus of this approach may include any combination of some, all or none of the above-described preferred and optional features.

The present techniques may in general be applied to any type of device that comprises a static part and a moveable part which is moveable with respect to the static part. By way of non-limitative example, the actuator assembly may be, or may be provided in, any one of the following devices: a smartphone, a protective cover or case for a smartphone, a functional cover or case for a smartphone or electronic device, a camera, a foldable smartphone, a foldable smartphone camera, a foldable consumer electronics device, a camera with folded optics, an image capture device, an array camera, a 3D sensing device or system, a servomotor, a consumer electronic device (including domestic appliances such as vacuum cleaners, washing machines and lawnmowers), a mobile or portable computing device, a mobile or portable electronic device, a laptop, a tablet computing device, an e-reader (also known as an e-book reader or e-book device), a computing accessory or computing peripheral device (e.g. mouse, keyboard, headphones, earphones, earbuds, etc.), an audio device (e.g. headphones, headset, earphones, etc.), a security system, a gaming system, a gaming accessory (e.g. controller, headset, a wearable controller, joystick, etc.), a robot or robotics device, a medical device (e.g. an endoscope), an augmented reality system, an augmented reality device, a virtual reality system, a virtual reality device, a wearable device (e.g. a watch, a smartwatch, a fitness tracker, etc.), a drone (aerial, water, underwater, etc.), an aircraft, a spacecraft, a submersible vessel, a vehicle, an autonomous vehicle (e.g. a driverless car), a tool, a surgical tool, a remote controller (e.g. for a drone or a consumer electronics device), clothing (e.g. a garment, shoes, etc.), a switch, dial or button (e.g. a light switch, a thermostat dial, etc.), a display screen, a touchscreen, a flexible surface, and a wireless communication device (e.g. near-field communication (NFC) device). It will be understood that this is a non-exhaustive list of example devices.

Actuator assemblies as described herein may be used in devices/systems suitable for image capture, 3D sensing, depth mapping, aerial surveying, terrestrial surveying, surveying in or from space, hydrographic surveying, underwater surveying, scene detection, collision warning, security, facial recognition, augmented and/or virtual reality, advanced driver-assistance systems in vehicles, autonomous vehicles, gaming, gesture control/recognition, robotic devices, robotic device control, touchless technology, home automation, medical devices, and haptics.

Embodiments of the present techniques will now be described by way of example with reference to the accompanying drawings in which:

Fig. 1 is a schematic drawing of a folded optics arrangement and has already been described;

Figs. 2A-2D are schematic drawings of, respectively, a perspective view, a top view, a side view and an end view of a folded optics arrangement with an SMA actuator assembly according to a first embodiment of the present techniques;

Figs. 3A-3D are schematic drawings of, respectively, a perspective view, a top view, a side view and an end view of a folded optics arrangement with an SMA actuator assembly according to a second embodiment of the present techniques

Figs. 4A-4C are schematic drawings of, respectively, a side view, an end view and a top view of a folded optics arrangement with an SMA actuator assembly according to a third embodiment of the present techniques;

Figs. 5A-5C are schematic drawings of, respectively, a side view, an end view and a top view of a folded optics arrangement with an SMA actuator assembly according to a fourth embodiment of the present techniques;

Fig. 6 is a schematic drawing of a control circuit which may be used in embodiments of the present techniques;

Fig. 7 illustrates movement of the SMA actuator assembly of e.g. Fig. 3; and

Fig. 8 is a graph of gearing ratio versus wire inclination angle for the movement of Fig. 7.

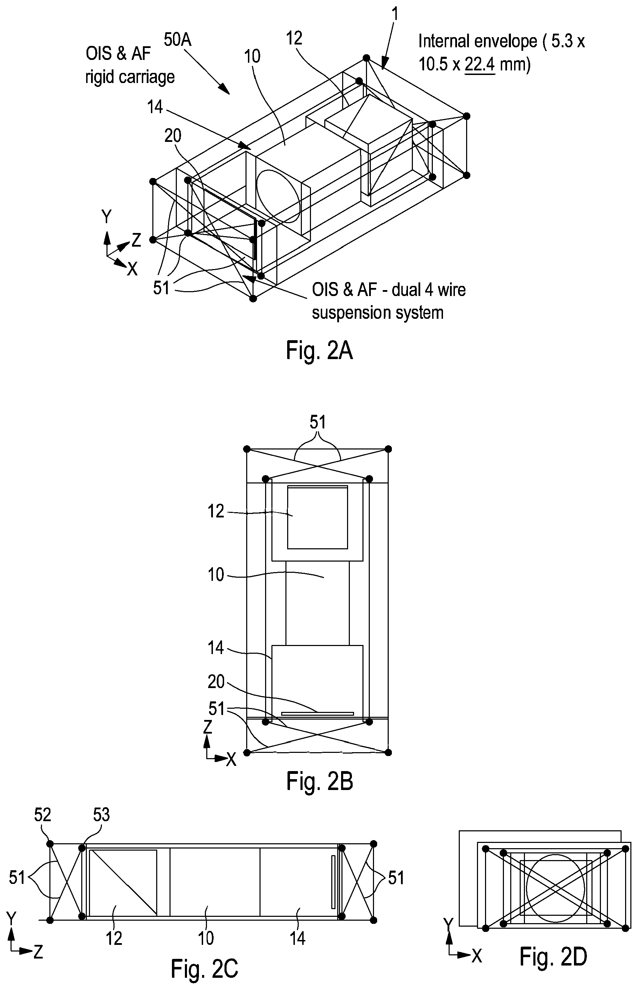

Figs. 2-5 show four embodiments of SMA actuator assemblies according to the present techniques. Each of these embodiments is illustrated in the context of a similar foldable optics assembly in which like reference numerals are used to refer to identical/similar features and, unless indicated otherwise or impractical, features described in relation to one embodiment are equally applicable to each of the other embodiments.

As well as embodying an implementation of the SMA actuator assemblies, the illustration of these embodiments in optics assemblies provides context for the connection of the SMA actuator wires, but it will be understood by the skilled person that the utilisation and implementation of SMA actuator assemblies according to the present techniques are not limited to folded cameras or even optical assemblies.

Figs. 2A-2D show an actuator assembly 50A in which the SMA actuator wires 51 are provided as two groups of four wires at opposite ends of the assembly 50 along the z-axis indicated. The construction and manner of operation of SMA actuator wires are well-known as discussed in, for example, WO 2011/104518 and will not be discussed further here.

A movable lens element 10 is mounted along an optical axis (the z-axis as shown in Figs. 2A-2D) between a mirror or prism 12 (which will be referred to as a "mirror" below for simplicity) and an image sensor 20. The mirror 12 reflects or refracts light entering the assembly in the y-direction shown (for example from an object lens of a miniature camera) and "folds" to pass along the optical axis of the movable element 10, through the lens or lenses mounted therein, to the image sensor 20.

The lens element 10 is extended by a carriage 14 which provides a structural interface for the wires to attach to without impinging on the optical region of the assembly. The carriage 14 has two elongate plates extending down either side of the lens element 10 parallel to the optical axis of the lens element. Together the plates define a cuboid to which the SMA actuator wires 51 can be connected to each corner (or close to each corner).

The SMA actuator wires are coupled in a symmetric arrangement at each end and are crossed so that the SMA actuator wire which is coupled to the bottom left hand corner of the housing 1 (as viewed along the z axis as shown in Fig. 2D) at one end is coupled to the top right hand corner of the carriage 14 (again, as viewed along the z axis), with the other SMA actuator wires 51 at each end similarly coupled so that each corner of the housing 1 is coupled by an actuator wire 51 to the opposite corner of the end of the carriage 14 at that end of the apparatus. Each SMA actuator wire 51 is connected between a static crimp 52 which is attached to the housing 1 and a moving crimp 53 which is attached to the carriage 14.

It can be seen that, by actuating selected ones of the actuator wires 51, the movable element 10 can be driven with multiple degrees of freedom. In the most general case, positional control can be provided to move the movable element 10 with all the following degrees of freedom: lateral movement in any direction (including in both directions along each of the axes indicated) and tilting or rotation about any axis. Appropriate control of the actuator wires 51 may allow movement in a more restricted manner if desired (e.g. translational movement along each of the axes indicated and rotation about one or more of the axes indicated).

The degrees of freedom in the positional control result from the configuration of the SMA actuator wires 41. The two groups of four SMA actuator wires 51 on either side of the movable element 10, if actuated as a group, can each provide a force in opposing directions along the z-axis. Due to the symmetric arrangement, actuation of two of the wires 51 in each group which all have a static crimp 52 on the same side of the housing 1 will provide a force along the x- or y- axis, whilst actuation of the opposing two wires 51 in each group will provide a force in the opposite direction along the same axis.

Similarly, it can be seen that differential actuation of wires 51 (for example actuation of the two wires connected to a static crimp 52 on one side of the housing 1 at one end, and actuation of the two wires connected to a static crimp 52 on the opposite side of the housing 1 at the other end) will cause rotation of the movable element 10 (in the example given, if equal and opposite forces are applied, the rotation will be about an axis passing through the centre of the movable element 10 in either the x- or y-direction).

The provision of the carriage 14 can extend one or more dimensions of the movable element 10 thereby allowing for longer SMA actuator wires 51 to be connected between the housing 1 and the carriage 14 than may have been possible if the actuator wires 51 were connected directly to the movable element 10. Using longer SMA actuator wires 51 can improve (increase) the range of movement (stroke) of the movable element that can be caused and controlled by the actuator wires. For this reason it may also be advantageous that the SMA actuator wires 51 are arranged in a crossed manner as shown in Figs. 2-4 as this allows the length of the actuator wires 51 to be maximised whilst remaining within the overall dimensions of the housing 1.

The provision of the carriage 14 can also permit the actuator wires 51 to be connected across the movable element, but not impinge on the volume between the movable element 10 and either end of the housing 1 (in the arrangement in Fig. 2, this is the volume between the movable element 10 and the image sensor 20 and/or the volume between the mirror 12 and the movable element 10) which might interfere with the operation of the apparatus, for example on the passage of light through a camera apparatus.

Although the SMA actuator wires 51 are depicted in the embodiments as being arranged exactly symmetrically within each group, such that the wires in each group would all cross (in the arrangements shown in Figs. 2-4) at a single point, it will be appreciated that this arrangement is not practical in reality as it will lead to contact between the wires, which may in turn lead to short-circuits, friction and/or forces being exerted by one wire on another. Thus, in the embodiments of the present techniques, the SMA actuator wires 51 are in fact arranged slightly asymmetrically within each group, such that they are separated sufficiently to avoid contact during operation. The terms "symmetrical" and "symmetry" as used in this application are to be understood as encompassing such arrangements in which there is a small degree of asymmetry, particularly in order to permit wires to cross without touching.

In the embodiment shown in Fig. 2, it can be seen that the SMA actuation apparatus can be used to provide a camera, such as the folding camera shown in Fig. 2, with OIS by driving movement of a movable lens element 10 perpendicular to the optical axis of that lens element (the z-axis in Fig. 2) so as to change the light incident on the image sensor 20.

Similarly, in the embodiment shown in Fig. 2, it can be seen that the SMA actuation apparatus can be used to provide a camera, such as the folding camera shown in Fig. 2, with AF by driving the movement of a movable lens element 10 parallel to the optical axis of that lens element (the z-axis in Fig. 2), so as to change the distances between the lens element 10 and the image sensor 20.

The arrangement of the SMA actuation apparatus in the embodiment shown in Fig. 2 is advantageous for use with a folding camera and other uses where the available space in at least one dimension of the apparatus is restricted. As the actuation apparatus is located on two sides of the movable element 10, the actuation apparatus does not increase the "height" of the apparatus (the dimension in the y-axis shown in Fig. 2).

The arrangement of the SMA actuation apparatus in the embodiment shown in Fig. 2 may also be advantageous for use with a folding camera, or other optical apparatus, as the two groups of SMA actuator wires 51 are positioned at opposite ends of the apparatus along the optical axis of the movable lens element 10. This allows for the greatest range of movement (stroke) of the lens element 10 to be along the optical axis. As AF typically requires a greater range of movement of the lens element than OIS, arrangements in which a greater range of motion is possible along the optical axis as opposed to in directions perpendicular to the optical axis may be beneficial.

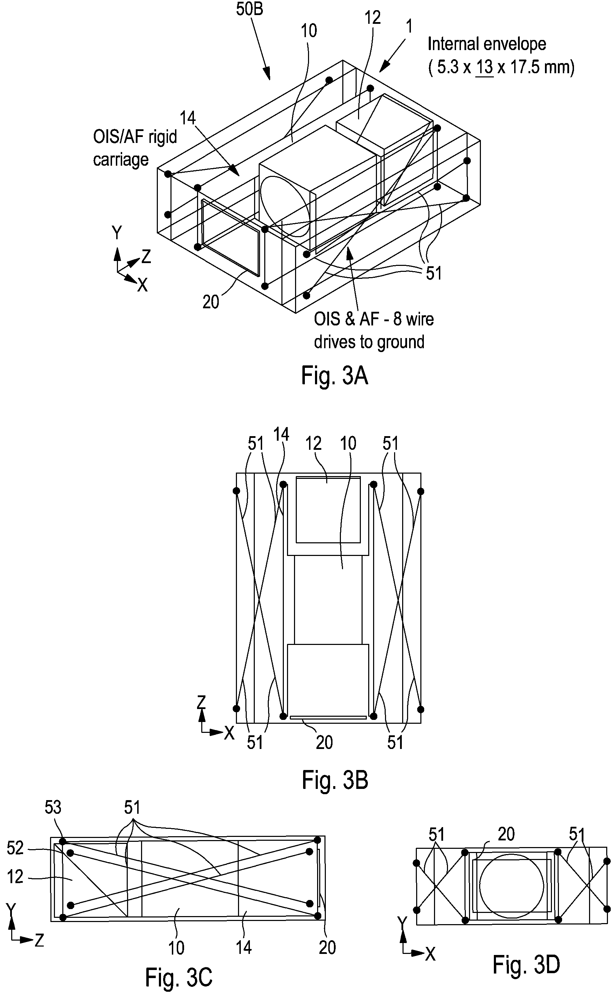

Figs. 3A-3D show an actuator assembly 50B in which the SMA actuator wires 51 are provided as two groups of four wires on either side of the assembly 50, in other words on opposite sides of the assembly along the x axis as indicated. Otherwise the actuator assembly 50B of Figs. 3A-3D is substantially as described in relation to Figs. 2A-2D above.

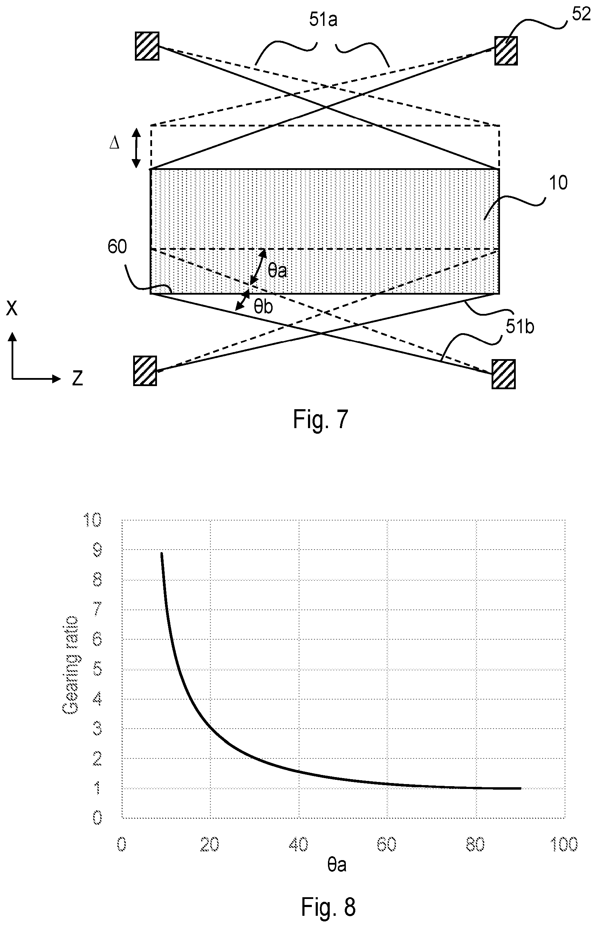

Referring to Figs. 7 and 8, the concept of a gearing ratio will now be described.

Fig. 7 is a view along the y-axis of a simplified version of the actuator assembly 50B as the lens element 10 moves in a direction along the x-axis (cf. Fig. 3B). However, the following description also applies to other actuator assemblies and to movements in directions along other axes.

As can be seen in Fig. 7, the SMA wires 51a, 51b are each inclined, at an acute angle relative to the y-z plane 60 (i.e. the plane perpendicular to the direction of movement). In this example, the y-z plane 60 is parallel to the sides of the lens element 10 to which the SMA wires 51b are connected. The figure shows the SMA wires 51a, 51b in a first state (shown by the dashed lines), which may be a zero-position state, and in a second state (shown by the solid lines) in which the SMA wires 51b on a first side of the lens element 10 have contracted and the SMA wires 51a on the second side have expanded. In the first state, the SMA wires 51b on the first side each have an initial length $L_1$ and are inclined at an initial angle $\theta_a$ relative to the y-z plane 60. In the second state, these SMA wires 51b each have a (shorter) length $L_2$ and are inclined at a (smaller) angle $\theta_b$ relative to the y-z plane 60. This contraction of the SMA wires 51b causes the lens element 10 to move by a distance $\Delta$ along the x-axis.

A gearing ratio can be defined as the ratio of the distance $\Delta$ to the change in length $(L_1 - L_2)$ of the SMA wires 51b, i.e.:

$$\text{gearing ratio} = \Delta \, / \, (L_1 - L_2) \qquad\qquad\qquad (\text{Eq. 1})$$

For movements along the x-axis, the gearing ratio depends on the angle $\theta$ (the initial angle $\theta_a$) of the SMA wires 51b relative to the y-z plane 60 (hereinafter sometimes referred to as the wire inclination angle).

Fig. 8 is a graph of gearing ratio versus wire inclination angle $\theta$. The gearing ratio is 1 at a wire inclination angle $\theta$ of 90° and increases as the wire inclination angle $\theta$ decreases. At small wire inclination angles $\theta$ (e.g. below about 10°) the gearing ratio increases significantly (e.g. above about 10).

On the one hand, a higher gearing ratio (i.e. a small wire inclination angle $\theta$) is preferred as it enables a greater range of movement of the lens element 10, i.e. 'stroke'. Hence some examples may be configured such that the wire inclination angle $\theta$ is less than ~30° and/or the gearing ratio is greater than ~2. On the other hand, if the gearing ratio is too high (i.e. the wire inclination angle $\theta$ is too low), then positional control of the lens element 10 becomes unstable and/or less precise. Hence some examples may be configured such that the wire inclination angle is greater than ~10° and/or the gearing ratio is less than ~10. As will be appreciated, these ranges may differ depending on the circumstances. However, generally speaking, very low wire inclination angles $\theta$ (e.g. less than 1° or less than 5° or less than 10°) and/or very high gearing rations (e.g. above 10 or above 20) do not facilitate suitable actuator performance.

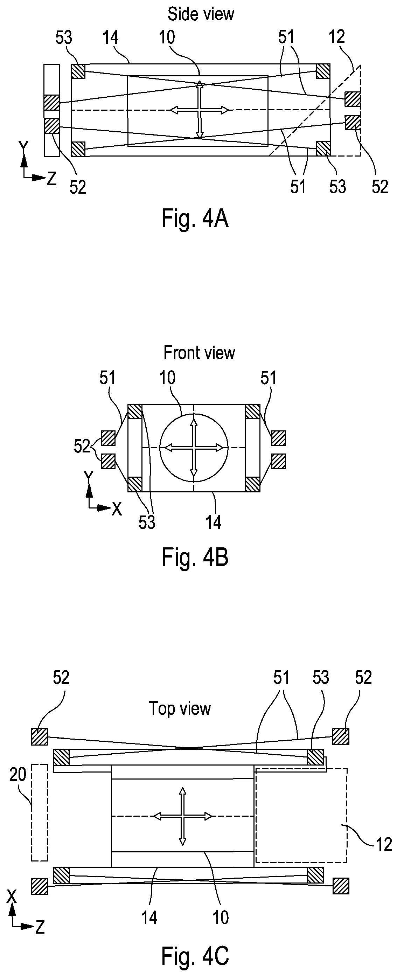

Figs. 4A-4C show an actuator assembly 50C in which the SMA actuator wires 51 are provided as two groups of four wires on either side of the assembly 50 in a similar position to the wires in Figs. 3A-3D. However, in the arrangement in Figs. 4A-4C, the fixed ends of the SMA actuator wires 51 are not attached to corners of the housing 1, but are attached at or close to the mid-points of the housing 1 in the y-direction. This means that whilst pairs of actuator wires 51 cross in the y-direction (as shown in Figs. 4A and 4C), there is no crossing of four wires (e.g. as shown in Fig. 3C). The crossing of each pair of actuator wires 51 also occurs closer to the edges of the housing 1 in the y-direction, as opposed to in the centre of the housing 1.

As the SMA actuator wires 51 in the arrangement shown in Figs. 4A-4C only cross as pairs of wires, this arrangement may be easier to manufacture than arrangements in which four wires are crossing.

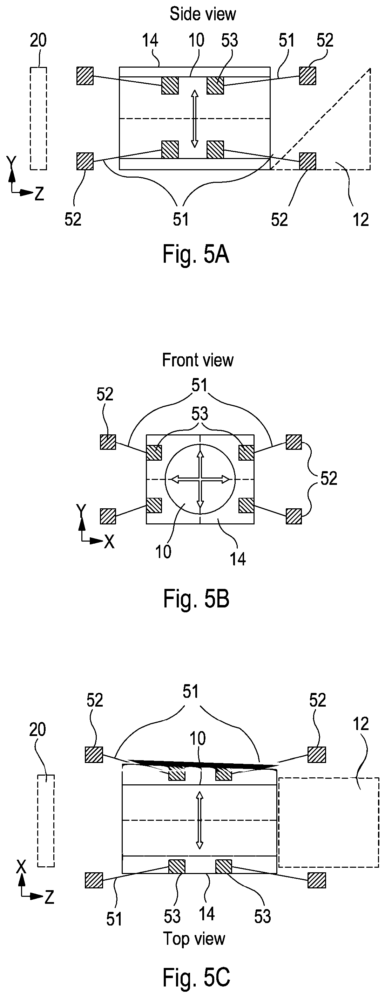

Figs. 5A-5C shown an actuator assembly 50D in which the SMA actuator wires 51 do not cross at all. Rather, the actuator wires 51 each extend from a movable crimp 53 positioned on the side of the movable element 10 in the y-direction, and approximately in the centre of the movable element 10 in the z-direction, towards a static crimp 52 positioned on the housing 1. The static crimp 52 to which one end of each actuator wire 51 is connected is the closest static crimp 52 to the movable crimp 53 to which the other end of the actuator wire 51 is attached and is positioned outside the position of the movable crimp in all directions.θ

The assembly shown in Figs. 5A-5C can be made more compact than the arrangements shown in Figs. 2-4. In particular, the carriage 14 does not need to extend a substantial distance along the z-direction. It is also less complicated to construct as there is no crossing of the actuator wires 51. This assembly is configured to favour motion in the x- and y-directions indicated, but only provides a relatively small range of movement in the z-direction. Therefore this arrangement is most suited to uses where the range of desired movement is mainly lateral movement in a particular plane (and/or movement in directions perpendicular to that plane is provided by additional arrangements/components).

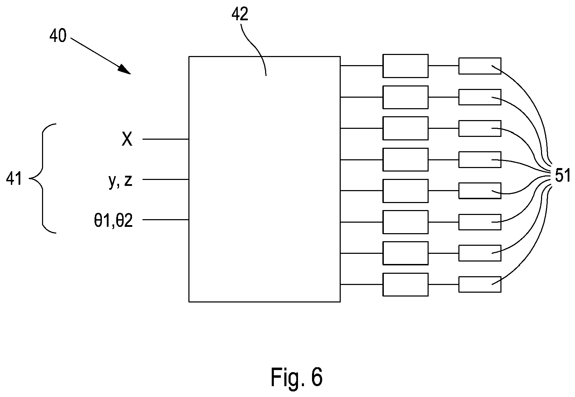

Fig. 6 shows a schematic arrangement of a control circuit 40 for controlling an SMA actuator assembly, such as those shown in Figs. 2-5. The control circuit 40 generates drive signals for each of the SMA actuator wires 51. The control circuit 40 derives the drive signals from the desired movement represented by movement signals 41. In the arrangement shown, one movement signal represents the desired movement z along the primary axis. Another movement signal represents the desired movements x, y along the axes orthogonal to the primary axis. Another movement signal represents the desired tilts θ1 and θ2.

The movement signals are supplied to a matrix controller 42 that may be implemented in a processor or in hardware. The matrix controller 42 generates a control signal for each of the SMA actuator wires 51 on the basis of the movement signals 41 by relating the necessary contraction of each of the actuator wires to achieve the movements desired in the movement signals 41. Further details of the operation of the controller and the driving of SMA actuator wires are known to the skilled person, for example from WO 2011/104518.

The movement signals 41 may be generated based on sensed movement of the apparatus (for example to provide for OIS) or based on a sensed image on the image sensor 20 (for example to provide for AF).

Although some of the above approaches have been described with specific reference to cameras and camera assemblies, it will be appreciated that the configuration and/or control of the actuator assemblies involved can be applied in other fields where controlled movement of a movable element relative to a support structure is desirable.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from the scope of the appended claims.

**Claims**

1. A shape memory alloy, SMA, actuation apparatus comprising:

   a support structure (14);
   a movable element (10), the movable element (10) being supported on the support structure (14) so as to be movable relative to the support structure (14); and
   eight SMA actuator wires (51) connected between the movable element (10) and the support structure (14) such that, on contraction, the actuator wires (51) provide a force on the movable element (10), wherein each actuator wire is inclined with respect to a notional primary axis, wherein the actuator wires (51) are suitable for moving the movable element (10) with translational movement in any direction and/or rotational movement about any axis, and wherein the actuator wires (51) are arranged such that two groups of four of said wires (51) are positioned on opposite sides of the movable element (10), wherein the actuator wires (51) have reflectional symmetry in three orthogonal planes, wherein a small degree of asymmetry is introduced in order to permit actuator wires to cross without touching.

2. An apparatus according to claim 1 wherein the actuator wires (51) are suitable for moving the movable element (10) with translational movement in any direction with a gearing ratio of less than 10.

3. An apparatus according to claim 1 or claim 2 wherein, for any given direction, the actuator wires (51) comprise a set of actuator wires (51) that are inclined at an acute angle greater than zero relative to a plane perpendicular to the given direction.

4. An apparatus according to any preceding claim wherein, in a given group of actuator wires (51) on one side of the movable element (10), the actuator wires (51) are each inclined at an acute angle greater than zero relative to each of three orthogonal planes including a first plane that is parallel to the primary axis and/or to an axis about which the actuator wires (51) have two-fold rotational symmetry, optionally wherein the first plane passes midway between the said opposite sides of the movable element (10), optionally wherein the first plane intersects the midpoints of each of the actuator wires (51) in the given group.

5. An apparatus according to claim 4, wherein the first plane is parallel to the side of the movable element (10) on which the given group is positioned.

6. An apparatus according to any one of claims 3 to 5, wherein the acute angle is greater than 10°.

7. An apparatus according to any preceding claim wherein all of the wires (51) connected to the same side of the movable element, on contraction, effect lateral movement in the movable element (10) with respect to the primary axis.

8. An apparatus according to any one of the preceding claims wherein the movable element (10) comprises a central element and a least one extension element which extends from the central element with an extent parallel to the primary axis, wherein the actuator wires (51) in at least one of the groups of actuator wires (51) are connected to the extension element at points distal from the central element, optionally wherein the extension element extends from the central element with extents in both directions parallel to the primary axis, wherein the actuator wires (51) in both groups of actuator wires (51) are connected to the extension element at points distal from the central element.

9. An apparatus according to any one of the preceding claims wherein the SMA actuator wires (51) have electrical connections that allow each of the SMA actuator wires (51) to receive an independent drive signal.

10. An apparatus according to any one of the preceding claims further comprising a control circuit (40) electrically connected to the SMA actuator wires (51) for supplying drive signals thereto.

11. An apparatus according to any one of the preceding claims further comprising an image sensor (20) fixed to the support structure (14) and wherein the movable element (10) includes a lens element arranged to direct light to the image sensor (20), the apparatus having an optical axis, optionally wherein the SMA actuator wires (51) are configured to move the movable element (10) for providing optical image stabilisation (OIS) and auto-focus (AF).

12. An apparatus according to claim 11 wherein the range of movement in the movable element (10) is configured to be smaller along in comparison to that orthogonal to the optical axis.

13. An apparatus according to claim 11 wherein the range of movement in the movable element (10) is configured to be the same or larger along the optical axis in comparison to that orthogonal to the optical axis.

14. An apparatus according to any one of claims 11 to 13 further comprising a diverter element fixed to the support structure (14) and arranged to change the direction of light entering the apparatus such that it passes along the optical axis through the lens element to the image sensor (20), optionally wherein the diverter element comprises a mirror.

15. An apparatus according to any one of claim 11 to 14 when dependent on claim 10, further comprising a vibration sensor arranged to generate output signals representative of the vibration of the apparatus, the control circuit (40) being arranged to generate the drive signals in response to said output signals to stabilise the image sensed by the image sensor (20).

16. An apparatus according to any one of claims 11 to 15 as dependent on claim 10, wherein the control circuit (40) is arranged to generate the drive signals in response to the sensed image on the image sensor (20) in order to focus the image sensed by the image sensor (20).

**Patentansprüche**

1.  Betätigungsvorrichtung für eine Formgedächtnislegierung (shape memory alloy, SMA), umfassend:

    eine Stützstruktur (14);
    ein bewegliches Element (10), wobei das bewegliche Element (10) an der Stützstruktur (14) gestützt wird, sodass es relativ zu der Stützstruktur (14) bewegt werden kann; und
    acht SMA-Aktordrähte (51), die zwischen dem beweglichen Element (10) und der Stützstruktur (14) verbunden sind, sodass, bei Kontraktion, die Aktordrähte (51) eine Kraft an dem beweglichen Element (10) bereitstellen, wobei jeder Aktordraht in Bezug auf eine gedachte Primärachse geneigt ist, wobei die Aktordrähte (51) geeignet sind zum Bewegen des beweglichen Elements (10) mit Translationsbewegung in jegliche Richtung und/oder Drehbewegung um jegliche Achse, und wobei die Aktordrähte (51) angeordnet sind, sodass zwei Gruppen von vier der Drähte (51) auf gegenüberliegenden Seiten des beweglichen Elements (10) positioniert sind, wobei die Aktordrähte (51) Spiegelsymmetrie in drei orthogonalen Ebenen aufweisen, wobei ein kleiner Grad der Asymmetrie eingeführt wird, um zuzulassen, dass sich Aktordrähte kreuzen, ohne sich zu berühren.

2.  Vorrichtung nach Anspruch 1, wobei die Aktordrähte (51) geeignet sind zum Bewegen des beweglichen Elements (10) mit Translationsbewegung in jegliche Richtung mit einem Übersetzungsverhältnis von weniger als 10.

3.  Vorrichtung nach Anspruch 1 oder Anspruch 2, wobei, für jegliche bestimmte Richtung, die Aktordrähte (51) einen Satz Aktordrähte (51) umfassen, die in einem spitzen Winkel größer null relativ zu einer Ebene senkrecht zu der bestimmten Richtung geneigt sind.

4.  Vorrichtung nach einem vorhergehenden Anspruch, wobei, in einer bestimmten Gruppe von Aktordrähten (51), auf einer Seite des beweglichen Elements (10) die Aktordrähte (51) jeweils in einem spitzen Winkel größer null relativ zu jeder aus drei orthogonalen Ebenen geneigt sind, einschließlich einer ersten Ebene, die parallel zu der Primärachse und/oder zu einer Achse ist, um die die Aktordrähte (51) zweifache Rotationssymmetrie aufweisen, wobei optional die erste Ebene in der Mitte zwischen den gegenüberliegenden Seiten des beweglichen Elements (10) verläuft, wobei optional die erste Ebene die Mittelpunkte von jedem der Aktordrähte (51) in der bestimmten Gruppe schneidet.

5.  Vorrichtung nach Anspruch 4, wobei die erste Ebene parallel zu der Seite des beweglichen Elements (10) ist, auf der die bestimmte Gruppe positioniert ist.

6.  Vorrichtung nach einem der Ansprüche 3 bis 5, wobei der spitze Winkel größer als 10° ist.

7.  Vorrichtung nach einem vorhergehenden Anspruch, wobei alle der Drähte (51), die mit derselben Seite des beweglichen Elements verbunden sind, bei Kontraktion, die laterale Bewegung in dem beweglichen Element (10) in Bezug auf die Primärachse beeinflussen.

8.  Vorrichtung nach einem der vorhergehenden Ansprüche, wobei das bewegliche Element (10) ein zentrales Element und mindestens ein Erweiterungselement umfasst, das sich von dem zentralen Element mit einer Erweiterung parallel zu der Primärachse erstreckt, wobei die Aktordrähte (51) in mindestens einer der Gruppen von Aktordrähten (51) mit dem Erweiterungselement an Punkten verbunden sind, die distal von dem zentralen Element sind, wobei sich optional das Erweiterungselement von dem zentralen Element mit Erweiterungen in beide Richtungen parallel zu der Primärachse erstreckt, wobei die Aktordrähte (51) in beiden Gruppen von Aktordrähten (51) mit dem Erweiterungselement an Punkten verbunden sind, die distal von dem zentralen Element sind.

9.  Vorrichtung nach einem der vorhergehenden Ansprüche, wobei die SMA-Aktordrähte (51) elektrische Verbindungen aufweisen, die zulassen, dass jeder der SMA-Aktordrähte (51) ein unabhängiges Antriebssignal empfängt.

10. Vorrichtung nach einem der vorhergehenden Ansprüche, ferner umfassend einen Regelkreis (40), der elektrisch mit den SMA-Aktordrähten (51) verbunden ist, um diese mit Antriebssignalen zu versorgen.

11. Vorrichtung nach einem der vorhergehenden Ansprüche, ferner umfassend einen Bildsensor (20), der an der Stützstruktur (14) fixiert ist, und wobei das bewegliche Element (10) ein Linsenelement beinhaltet, das angeordnet ist, um Licht zu dem Bildsensor (20) zu leiten, wobei die Vorrichtung eine optische Achse aufweist, wobei optional die SMA-Aktordrähte (51) konfiguriert sind, um das bewegliche Element (10) zu bewegen, um optische Bildstabilisierung (optical image stabilisation, OIS) und Autofokus (AF) bereitzustellen.

**12.** Vorrichtung nach Anspruch 11, wobei das Bewegungsausmaß in dem beweglichen Element (10) konfiguriert ist, um kleiner entlang im Vergleich zu dem orthogonal zu der optischen Achse zu sein.

**13.** Vorrichtung nach Anspruch 11, wobei das Bewegungsausmaß in dem beweglichen Element (10) konfiguriert ist, um gleich oder größer entlang der optischen Achse im Vergleich zu dem orthogonal zu der optischen Achse zu sein.

**14.** Vorrichtung nach einem der Ansprüche 11 bis 13, ferner umfassend ein Ablenkungselement, das an der Stützstruktur (14) fixiert ist und angeordnet ist, um die Richtung von Licht zu verändern, das in die Vorrichtung eintritt, sodass es entlang der optischen Achse durch das Linsenelement zu dem Bildsensor (20) verläuft, wobei optional das Ablenkungselement einen Spiegel umfasst.

**15.** Vorrichtung nach einem aus Anspruch 11 bis 14, wenn abhängig von Anspruch 10, ferner umfassend einen Schwingungssensor, der angeordnet ist, um Ausgangssignale zu erzeugen, die die Schwingung der Vorrichtung darstellen, wobei der Regelkreis (40) angeordnet ist, um die Antriebssignale als Reaktion auf die Ausgangssignale zu erzeugen, um das Bild zu stabilisieren, das durch den Bildsensor (20) abgetastet wird.

**16.** Vorrichtung nach einem der Ansprüche 11 bis 15, in Abhängigkeit von Anspruch 10, wobei der Regelkreis (40) angeordnet ist, um die Antriebssignale als Reaktion auf das abgetastete Bild an dem Bildsensor (20) zu erzeugen, um das Bild zu fokussieren, das durch den Bildsensor (20) abgetastet wird.

**Revendications**

**1.** Dispositif actionneur en AMF (alliage à mémoire de forme), comprenant :

une structure de support (14),
un élément mobile (10), l'élément mobile (10) étant supporté sur la structure de support (14) de façon à être mobile par rapport à la structure de support (14), et
huit fils actionneurs en AMF (51) raccordés entre l'élément mobile (10) et la structure de support (14) de façon que, lors d'une contraction, les fils actionneurs (51) assurent une force sur l'élément mobile (10), chaque fil actionneur étant incliné par rapport à un axe primaire théorique, les fils actionneurs (51) étant aptes à déplacer l'élément mobile (10) avec un déplacement en translation dans toute direction et/ou un déplacement en rotation sur tout axe, et les fils actionneurs (51) étant agencés de telle façon que deux groupes de quatre desdits fils (51) sont positionnés sur des côtés opposés de l'élément mobile (10), lesdits fils actionneurs (51) présentant une symétrie de réflexion dans trois plans orthogonaux, un faible degré d'asymétrie étant introduit afin de permettre aux fils actionneurs de se croiser sans se toucher.

**2.** Dispositif selon la revendication 1, dans lequel les fils actionneurs (51) sont aptes à déplacer l'élément mobile (10) avec un déplacement en translation dans toute direction, avec un rapport de transmission inférieur à 10.

**3.** Dispositif selon la revendication 1 ou la revendication 2, dans lequel, pour toute direction donnée, les fils actionneurs (51) comprennent un ensemble de fils actionneurs (51) qui sont inclinés selon un angle aigu supérieur à zéro par rapport à un plan perpendiculaire à ladite direction donnée.

**4.** Dispositif selon l'une quelconque des revendications précédentes, dans lequel, dans un groupe donné de fils actionneurs (51) d'un côté de l'élément mobile (10), les fils actionneurs (51) sont chacun inclinés selon un angle aigu supérieur à zéro par rapport à chacun des trois plans orthogonaux, dont un premier plan qui est parallèle à l'axe primaire et/ou à un axe par rapport auquel les fils actionneurs (51) présentent une double symétrie de rotation, ledit premier plan passant éventuellement à mi-chemin entre lesdits côtés opposés de l'élément mobile (10), ledit premier plan coupant éventuellement les points médians de chacun des fils actionneurs (51) dudit groupe donné.

**5.** Dispositif selon la revendication 4, dans lequel le premier plan est parallèle au côté de l'élément mobile (10) sur lequel le groupe donné est positionné.

**6.** Dispositif selon l'une quelconque des revendications 3 à 5, dans lequel l'angle aigu est supérieur à 10°.

**7.** Dispositif selon l'une quelconque des revendications précédentes, dans lequel tous les fils (51) raccordés au même côté de l'élément mobile permettent, lors d'une contraction, un déplacement latéral de l'élément mobile (10) par rapport à l'axe primaire.

8. Dispositif selon l'une quelconque des revendications précédentes, dans lequel l'élément mobile (10) comprend un élément central et au moins un élément de prolongement qui s'étend à partir de l'élément central avec une étendue parallèle à l'axe primaire, lesdits fils actionneurs (51) d'au moins un des groupes de fils actionneurs (51) étant raccordés à l'élément de prolongement en des points distants de l'élément central, ledit élément de prolongement s'étendant éventuellement à partir de l'élément central avec des étendues dans les deux directions parallèles à l'axe primaire, lesdits fils actionneurs (51) des deux groupes de fils actionneurs (51) étant raccordés à l'élément de prolongement en des points distants de l'élément central.

9. Dispositif selon l'une quelconque des revendications précédentes, dans lequel les fils actionneurs AMF (51) présentent des raccordements électriques qui permettent à chacun des fils actionneurs AMF (51) de recevoir un signal de commande indépendant.

10. Dispositif selon l'une quelconque des revendications précédentes, comprenant en outre un circuit de commande (40) raccordé électriquement aux fils actionneurs AMF (51) pour fournir des signaux de commande à ceux-ci.

11. Dispositif selon l'une quelconque des revendications précédentes, comprenant en outre un capteur d'image (20) fixé à la structure de support (14), et dans lequel l'élément mobile (10) comprend un élément formant objectif agencé pour diriger de la lumière vers le capteur d'image (20), le dispositif présentant un axe optique, lesdits fils actionneurs AMF (51) étant éventuellement conçus pour déplacer l'élément mobile (10) afin d'assurer la stabilisation optique d'image (OIS, optical image stabilisation) et la mise au point automatique (AF, autofocus).

12. Dispositif selon la revendication 11, dans lequel la plage de déplacement de l'élément mobile (10) est conçue pour être inférieure, le long de l'axe optique, à celle permise orthogonalement à l'axe optique.

13. Dispositif selon la revendication 11, dans lequel la plage de déplacement de l'élément mobile (10) est conçue pour être supérieure ou égale, le long de l'axe optique, à celle permise orthogonalement à l'axe optique.

14. Dispositif selon l'une quelconque des revendications 11 à 13, comprenant en outre un élément de déviation fixé à la structure de support (14) et agencé pour modifier la direction de la lumière entrant dans le dispositif de manière à ce qu'elle passe, le long de l'axe optique, à travers l'élément de lentille et jusqu' au capteur d'image (20), l'élément de déviation comprenant éventuellement un miroir.

15. Dispositif selon l'une quelconque des revendications 11 à 14, en dépendance de la revendication 10, comprenant en outre un capteur de vibrations agencé pour générer des signaux de sortie représentatifs des vibrations du dispositif, le circuit de commande (40) étant agencé pour générer les signaux de commande en réponse auxdits signaux de sortie afin de stabiliser l'image captée par le capteur d'image (20).

16. Dispositif selon l'une quelconque des revendications 11 à 15, en dépendance de la revendication 10, dans lequel le circuit de commande (40) est agencé pour générer les signaux de commande en réponse à l'image captée par le capteur d'image (20) afin de mettre au point l'image captée par le capteur d'image (20).

**12**
Prism/mirror
(fixed)

OIS - Y

OIS - X

AF - Z

1

20

10

Height, Y

Width, X

Length, Z

Fig. 1

OIS & AF rigid carriage

50A

10

12

1

Internal envelope ( 5.3 x 10.5 x 22.4 mm)

14

20

Y

Z

X

51

OIS & AF - dual 4 wire suspension system

Fig. 2A

51

12

10

14

20

51

Z

X

Fig. 2B

52    53

51

51

Y

Z

12      10      14

Fig. 2C

Y

X

Fig. 2D

50B
12
10
1
14

Internal envelope
( 5.3 x 13 x 17.5 mm)

OIS/AF rigid
carriage

Y
Z
X

20

51

OIS & AF - 8 wire
drives to ground

Fig. 3A

51  14  12  10  51

Z
X

51  20  51

Fig. 3B

53  51

52

12

Y
Z

10  14  20

Fig. 3C

51  20  51

Y
X

Fig. 3D

Side view

53  14  10  51  12

Y
└─►Z
52  51  53  52

## Fig. 4A

Front view

51  10  51

52

Y
└─►X
53  14

## Fig. 4B

52  51  53  52

Top view

20  12

X
└─►Z
14  10

## Fig. 4C

Side view

Fig. 5A

Front view

Fig. 5B

Top view

Fig. 5C

Fig. 6

Fig. 7

Fig. 8

## REFERENCES CITED IN THE DESCRIPTION

**Patent documents cited in the description**

- WO 2011104518 A
- CN 207937737 U
- US 2013002933 A1